# EUROPÄISCHE PATENTANMELDUNG

(11) **EP 2 824 139 A1**
(43) Veröffentlichungstag der Anmeldung: **14.01.2015**
(21) Anmeldenummer: 13003529.8
(22) Anmeldetag: 12.07.2013
(51) Int. Cl.: C08K 5/19, C09D 5/14, A01N 33/12

(54) **Kunststoff mit biozider Oberfläche und Verfahren zu dessen Herstellung**

(71) Anmelder: Jansen AG, 9463 Oberriet (CH)
(72) Erfinder: Winkler, Martin, 8853 Lachen (CH); Siegmann, Konstantin, 8606 Greifensee (CH)
(74) Vertreter: Patentbüro Paul Rosenich AG

(57) **Zusammenfassung**

Ein Kunststoff mit biozider Oberfläche weist zumindest eine quartäre Ammoniumverbindung in einer Konzentration von maximal 10% auf.

## Beschreibung

Die Erfindung betrifft einen Kunststoff, insbesondere Polyethylen, mit biozider Oberfläche, nach dem Oberbegriff des Anspruchs 1, sowie ein Verfahren zur Herstellung eines Kunststoffes, insbesondere Polyethylen, mit biozider Oberfläche, nach dem Oberbegriff der Ansprüche 7 oder 11.

Bei vielerlei Geräten sind antibakterielle oder keimhemmende Beschichtungen bekannt. So sind etwa bei medizinischen Vorrichtungen Kombinationen aus silberhaltiger Beschichtung/Polymer bekannt. Silberionen, wie auch Kupferionen, sind ein Gift für Mikroorganismen. Leider aber sind so geartete Beschichtungen nicht für jeden Zweck anwendbar, da es sich dabei um verbrauchende Beschichtungen handelt, welche langsam Metallionen beispielsweise an Wasser abgeben und deshalb für den Kontakt mit Trinkwasser und dafür vorgesehene Leitungen bzw. Behälter ungeeignet sind.

Eine Möglichkeit Biofilme zu verhindern ist eine biozide Oberfläche zu generieren, auf der sich Organismen erst gar nicht anlagern können.

Es ist relativ schwierig, die Oberfläche von Polyethylen permanent biozid auszurüsten. Polyethylen besteht aus langen Kohlenwasserstoffketten die sehr unreaktiv sind. Daran chemisch anzubinden ist nur mit drastischen Mitteln, wie z. B. hartem UV-Licht möglich.

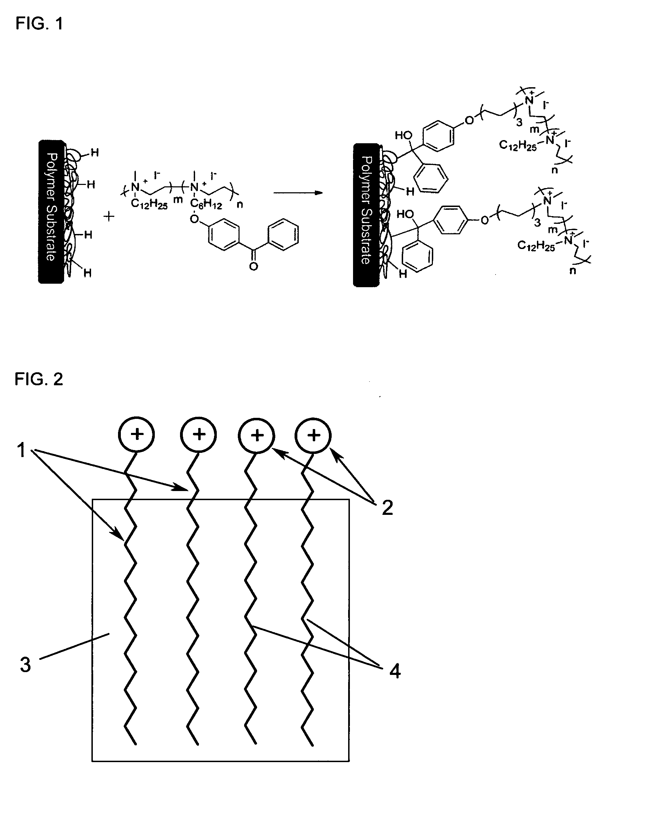

Fig. 1 zeigt das Aufbringen eines bioziden Polymers mittels geeigneter UV-Absorber und UV-Licht. Die Synthese des Polymers ist aufwendig und der Prozess kompliziert.

Die Thematik von nicht durch Beschichtung antibakteriell ausgerüstetem Polyethylen, gegebenenfalls dessen Extrusion, ist Gegenstand von u.a. den folgenden Veröffentlichungen, deren Offenbarung hiermit in die gegenständliche Anmeldung rezipiert wird: WO2012149591A1, CN102062264A, EP2436266A1, ES2370331 A1, DE202010003123U, DE202008014092U, WO2007045634 A2, JP61185562 A, US2011233810 A1, WO9932157 A2, JP2008184451 A, JP2007063410 A, JP2006083331 A, US6852776 B2, WO2004004456 A1, JP9324070 A, WO2012089998 A2, WO2006081617 A1, US6790910 B1, US5328698 A, US5322659 A, US2011198764 A1, US2007196605 A1, KR20090045503 A, DE202009006553U U1, DE10022453 A1, CN101775170 A. Gleiches gilt für die Offenbarung von Merkmalen in den Artikeln "Kunststoffe in Kontakt mit Trinkwasser" von Stefan Kötzsch et al. in AQUA & GAS Nr. 3/2013, Seiten 44 bis 52, "Biofilme in Trinkwasserinstallationen" von Hans Peter Füchslin et al. in AQUA & GAS Nr. 3/2013, Seiten 54 bis 59, und "Materialien in Kontakt mit Trinkwasser - Beurteilung nach DVGW und UBA" von Volker Meyer, in AQUA & GAS Nr. 3/2013, Seiten 60 bis 62. Gleiches gilt schliesslich auch für die Dissertation von Paul Kevin Barnes "The Synthesis and Practical Applications of Novel N-Halamine Biocides", Auburn, Alabama, 15. Dezember 2006. In der genannten Dissertation werden "Quaternary ammonium salt grafted PE films" erwähnt. "Grafted" heisst, dass die Quats chemisch an die Oberfläche gebunden sind, was diese Beschichtungen kompliziert und aufwändig in ihrer Herstellung macht. Insbesondere für die Herstellung von Rohren für Wasser sind diese Beschichtungen daher nicht geeignet.

Quartäre Ammoniumverbindungen, nachfolgend mit einer gebräuchlichen Abkürzung Quats bezeichnet, sind organische Ammoniumverbindungen, bei denen alle vier Valenzen eines Stickstoffatoms organisch gebunden sind. Es handelt sich somit um Salze (ionische Verbindungen), bestehend aus einem Kation und einem Anion.

Für Quats mit mindestens einer langen Alkylgruppe ist bekannt, dass diese neben oberflächenaktiven Eigenschaften auch Desinfektionswirkung aufweisen. Daher werden sie auch zu den Bioziden gezählt. Diese Eigenschaft der Quats wird auf vielen Gebieten genutzt, beispielsweise in Krankenhäusern, bei der Lebensmittelverarbeitung, in der Landwirtschaft, im Holzschutz und in der Industrie (Reinraumapplikationen), ebenso wie als Hauptwirkstoff in Antialgenmitteln (Algiziden) für Schwimmbäder und Pools. Mittlerweile haben Quats auch Bedeutung als ionische Flüssigkeiten erlangt, und werden auch in der Wasseraufbereitung als stark basische Ionenaustauscher für die Erzeugung von demineralisiertem Wasser eingesetzt.

Der Einsatz als Desinfektionsmittel basiert auf der Anreicherung von Quats in den Zellmembranen lebender Organismen, wobei die Funktion der Zellmembran beeinträchtigt wird. Diese Wirkung tritt auch ein, wenn die Quats kovalent an eine Oberfläche gebunden sind. Dies ist auch die Grundlage für die Verwendung insbesondere der kationischen Tenside auch als Desinfektionsmittel. Die mikrobizide Wirkung ist aber nur dann gegeben, wenn die am N-Atom gebundene Alkylgruppe eine Kettenlänge von 8 bis 18 C-Atomen aufweist.

Die nachfolgende Tabelle 1 zeigt einen Ausschnitt aus einer Tabelle mit einer Vielzahl von Möglichkeiten mit Quats auf Oberflächen, einschliesslich ihrer

**Tabelle 1 Schematische Darstellung einiger nicht-natürlicher Polykationen, chemisch immobilisiert auf verschiedenen Oberflächen**

| **Chemische Einheit** | **Oberfläche** | **Mikroorganismus** | **Beladung mit Mikroorganismus, Tötungseffizienz** |
|---|---|---|---|
| 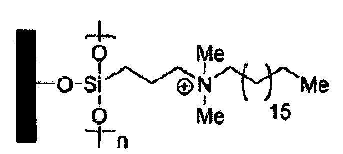 | 28 Oberflächen wurden eingesetzt | 26 Mikroorganismen wurden untersucht | 2 x 10²/cm², 95% Tötung in 30 Min |
| 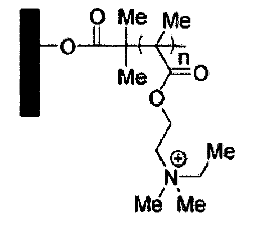 | Glas, Papier | E. coli, B. subtilis | Zwischen 1 x 10⁶ und 4 x 10⁷/cm², >99-100% Tötung in 1 h |
| 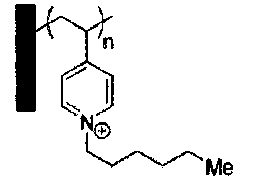 | Glas, Polyethylen, Polypropylen, Nylon, Polyethylenterphtalat | S. aureus, S. epidermidis, E. coli, P. aeruginosa | NE, zwischen 94 und > 99.8% Tötung in 2 Min. |
| 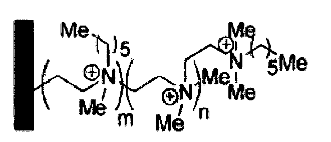 | Glas | S. aureus, E. coli | 1.5 x 10⁶/cm², 100% Tötung in 30 Min. |
| 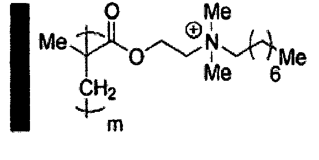 | Glas, Holz | A. niger | 1.0 x 10³/cm², 100% Tötung in 4 Tagen |

Problematisch ist jedoch die Anbindung von Quats auf Kunststoffoberflächen, insbesondere auf Polyethylenoberflächen. Bislang werden Quats mit aufwändiger Nasschemie und/oder unter Anwendung von UV-Licht und/oder mit komplizierter Plasmaaktivierung bzw. aufwändiger und teurer Synthese verarbeitet.

Die Aufgabe der vorliegenden Erfindung ist es somit, unter Vermeidung der obigen Nachteile einen Kunststoff anzugeben, dessen Oberfläche biozide Eigenschaften aufweist. Eine weitere Aufgabe der Erfindung ist , ein Verfahren zur Herstellung eines derartigen Kunststoffes anzugeben. Es sollen keine giftigen Chemikalien oder Auswaschprodukte in einem einfachen und wirtschaftlichen Prozess vorhanden sein. Vorzugsweise soll sich der Produktionsprozess von Gegenständen aus dem erfindungsgemässen Kunststoff, insbesondere von Kunststoffrohren, nur minimal ändern.

Die Aufgabe wird durch die Merkmale des unabhängigen Anspruchs gelöst. Vorteilhafte Weiterbildungen sind in den Figuren und in den abhängigen Patentansprüchen dargelegt.

Erfindungsgemäss ist dabei vorgesehen, dass der Kunststoff zumindest eine quartäre Ammoniumverbindung in einer Konzentration von maximal 10% aufweist. Besonders bevorzugt beträgt die Konzentration maximal 5%.

Vorzugsweise ist weiters vorgesehen, dass zumindest eine der quartären Ammoniumverbindungen mindestens einen langkettigen Kohlenwasserstoffrest, vorzugsweise mindestens ein C5-Alkyl, aufweist.

Wenn gemäss einer vorzugsweisen Ausführungsform der Erfindung zumindest eine der quartären Ammoniumverbindungen die gleiche Beschaffenheit wie das Basismaterial des Kunststoffes hat, ist aufgrund dieser gleichen Beschaffenheit das Quat optimal im Kunststoff verankert. Insbesondere soll damit eine chemisch-physikalische Ähnlichkeit umfasst sein und beispielsweise der langkettige Kohlenwasserstoffrest die gleiche Beschaffenheit wie das Kunststoff-Basismaterial haben. Für den Kunststoff Polyethylen ist beispielsweise ein hydrophober Kohlenwasserstoffrest vorgesehen bzw. muss einer der Substituenten am Stickstoffatom unpolar sein.Die optimale Wirksamkeit der quartären Ammoniumverbindung ergibt sich dabei, wenn vorteilhafterweise der Kohlenwasserstoffrest zumindest einer der quartären Ammoniumverbindungen im Kunststoff verankert ist und dessen Stickstoffgruppe über die Oberfläche des Kunststoffs herausragt.

Die Dichte der aktiven Gruppen kann weiter gesteigert werden, wenn gemäss einem weiteren erfindungsgemässen Ausführungsbeispiel zumindest eine der quartären Ammoniumverbindungen eine bifunktionelle, verbrückte quartäre Ammoniumverbindung ist. Diese Verbindungen weisen die allgemeine Struktur Quat-Brücke-Quat auf.

Besonders vorteilhaft ist dabei ein Variante, bei der die Brücke der bifunktionellen, verbrückten quartären Ammoniumverbindung zumindest eine der Ketten des Kunststoffs umschliesst und damit im Kunststoff verankert ist, wobei zumindest eine, vorzugsweise beide quartären Ammoniumverbindungen über die Oberfläche des Kunststoffs herausragen. Damit ist eine mechanische Verankerung der quartären

Ammoniumverbindung im Kunststoff gegeben (Verschlaufung) und diese Verbindungen können dann nicht mehr ausgewaschen werden.

Alternativ oder auch ergänzend zum Einbau in das Material des Kunststoffes kann im Rahmen der Erfindung auch vorgesehen sein, dass die Oberfläche des Kunststoffes mit zumindest einer quartären Ammoniumverbindung beschichtet ist.

Vorteilhafterweise ist weiters vorgesehen, dass die Oberflächenenergie des Kunststoffes einen Wert derart aufweist, dass biologisches Material nicht auf dem Kunststoff haftet.

Das Verfahren zur Herstellung eines Kunststoffes, insbesondere Polyethylen, mit biozider Oberfläche, ist zur Lösung der eingangs gestellten Aufgabe erfindungsgemäss dadurch gekennzeichnet, dass in die Kunststoff-Schmelze zumindest eine quartäre Ammoniumverbindung in einer Konzentration von maximal 5% eingemischt wird.

Vorzugsweise wird dabei zumindest eine quartäre Ammoniumverbindung mit einem langkettigen Kohlenwasserstoffrest, mit zumindest einem C5-Alkyl,in die Kunststoff-Schmelze eingemischt.

Insbesondere ist es von Vorteil, wenn zumindest eine quartäre Ammoniumverbindung mit gleicher Beschaffenheit wie das Basismaterial des Kunststoffes in die Kunststoff-Schmelze eingemischt wird. Durch die gleiche Beschaffenheit mischen sich Quat und Kunststoffmaterial optimal und das Quat wird dadurch optimal im Kunststoff verankert.

Gemäss einer vorzugsweisen Ausführungsform wird der Kohlenwasserstoffrest zumindest einer quartären Ammoniumverbindung im Kunststoff verankert, wobei die Stickstoffgruppe über die Oberfläche des Kunststoffs herausragt. Insbesondere bei unpolaren Kunststoffmaterialien, wie etwa bei Polyethylen, ist die positive Ladung des Stickstoffs inkompatibel mit dem unpolaren Kunststoff. Dadurch wandert das Quat an die Oberfläche und streckt die geladene Gruppe aus dem Kunststoff heraus.

Eine erfindungsgemässe Lösung für die eingangs gestellt Aufgabe ist auch dadurch möglich, dass die Oberfläche des Kunststoffs mit zumindest einer quartären Ammoniumverbindung beschichtet wird.

Eine vorteilhafte Variante beider Verfahren ist noch dadurch gekennzeichnet, dass die Oberflächenenergie auf einen Wert eingestellt wird, bei welchem biologisches Material nicht auf dem Kunststoff haftet.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: den Stand der Technik, insbesondere die fotochemische Anbindung eines Benzophenonderivates mit bioziden Molekülen (quartären Ammoniumsalzen, Quats) auf eine Polyethylenoberfläche,
- Fig. 2: einen Ausschnitt aus einer ersten Ausführungsform eines erfindungsgemässen Kunststoffes in schematischer Darstellung,
- Fig. 3: Ausführungsbeispiel für einen Extruder,
- Fig. 4: EDX-Spektrum von Polyethylen mit 10% Quat-Beimischung,

- Fig. 5: XPS-Spektrum von Polyethylen mit 10% Quat-Beimischung,
- Fig. 6: Infrarotspektrum von Polyethylen,
- Fig. 7: Infrarotspektrum von Polyethylen mit 10% Quat-Beimischung,
- Fig. 8: Infrarotspektrum von des bei Fig. 7 beigemischten Quat,
- Fig. 9: aus Quats gebildete Mizelle,
- Fig. 10: mit einer Polyethylenkette verschlauftes, bifunktionelles Quat,
- Fig. 11a: Beispiel für ein bifunktionelles Quat, und
- Fig. 11b: weiteres Beispiel für ein bifunktionelles Quat.

Die Erfindung soll im Folgenden anhand eines Beispieles der Herstellung eines Gegenstandes aus Polyethylen mit biozider Oberfläche erläutert werden. Dabei kann es sich beispielsweise um Rohre für (Trink)Wasser handeln, aber auch um andere Arten von Behältern für Flüssigkeiten und/oder Gase.

In die Polyethylenschmelze wird zumindest eine geeignete quartäre Ammoniumverbindung (Quat) 1 in der richtigen Konzentration zugegeben. Dieser Prozess heisst compoundieren. Im Rahmen der Entwicklung der gegenständlichen Erfindung wurden erfolgreiche Tests mit Quats der nachfolgenden Tabelle 2 durchgeführt:

**Tabelle 2:**

| Code | Formel | Lieferant | CAS | Preis |
|---|---|---|---|---|
| A | 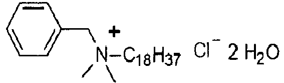 | TCI | 122-19-0 | 25g / 27 € |
| B | 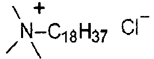 | Schrank 4 | 112-03-8 | |
| C | 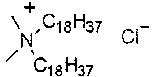 | TCI | 107-64-2 | 25g / 20 € |
| D | 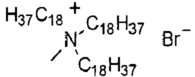 | Aldrich | 18262-86-7 | 5g / 172 CHF |
| E | 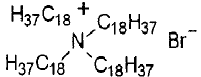 | Aldrich | 63462-99-7 | 5g / 213 CHF |

Wegen der Unverträglichkeit der Quats 1 mit dem Polyethylen migrieren diese an die Oberfläche und können dort ihre biozide Wirkung entfalten. Dieses Phänomen nennt man Selbstorganisation, von selber strecken die Quats 1 ihre Ladungsträger 2 aus dem Kunststoffmaterial 3, weil sie mit diesem nicht mischbar sind. Die langen Polymerketten 4 der Quat 1 mischen sich aber mit dem Polyethylen, weil sie gleich wie dieses aufgebaut sind, d.h. aus Kohlenwasserstoffen bestehen, getreu dem Grundsatz: Similis similia solvuntur (Gleiches löst Gleiches). Da die Kohlenwasserstoffketten der Quats im Polymer drinstecken und die Quats festhalten, nennen wir diese Funktion "Anker", die Polymerketten verankern das Quat, bildlich gesprochen, im Polyethylen.

Polyethylen wird im Rahmen des erfindungsgemässen Herstellungsverfahrens unter den geeigneten Bedingungen mit der angemessenen Menge an Quat compoundiert. Dabei ist auch von Bedeutung, dass die Temperatur der Schmelze nicht zu hoch wird, um ein Zersetzen der quartären Ammoniumverbindungen zu verhindern.

Wie in Fig. 2 schematisch dargestellt ist, (wobei jedoch das Gegenion zum positiven Stickstoffpart 2 nicht gezeigt ist) wirkt der lange Kohlenwasserstoffteil 4 der quartären Ammoniumverbindung 1 als Anker, der die Moleküle im Kunststoff 3 fixiert. Die geladenen Kopfteile 2 ragen in das den Kunststoff 3 umgebende Medium und wirken dort biozid.

Das negativ geladene Gegenion sitzt in der Nähe der positiven Ladung, beispielsweise ausserhalb der Polyethylenmatrix, d.h. ausserhalb des Kunststoffmaterials, unmittelbar oberhalb seiner Oberfläche.

Der "Anker" besteht aus der Kohlenwasserstoffkette 4 des Quats 1, diese nennt man apolar. Die Kohlenwasserstoffkette ist kovalent an den quartären Stickstoff gebunden. Da sie gleich wie Polyethylen aufgebaut ist, kann sie mit den Kohlenwasserstoffketten des Polyethylens wechselwirken, d.h. Polyethylen und Kohlenwasserstoffkette des Quats ziehen sich gegenseitig an. Diese gegenseitige Anziehung ist keine kovalente Bindung, man spricht von einer Van-der-Waals Kraft, die schwächer ist als eine richtige Bindung.

Vorzugsweise werden sich die Quats wie oben erläutert selbstorientieren. Um diesen Prozess jedoch zu unterstützen, kann während des Mischens oder auch während der weiteren Verabeitung eine Unterstützung der Ausrichtung der Quats mittels elektrostatischer Kräfte od. dgl. vorgesehen sein.

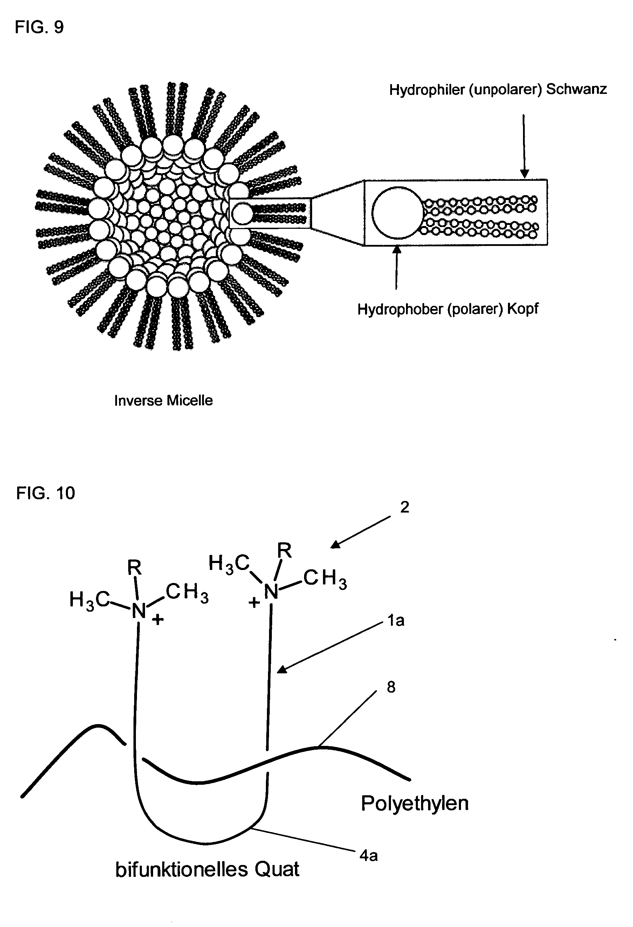

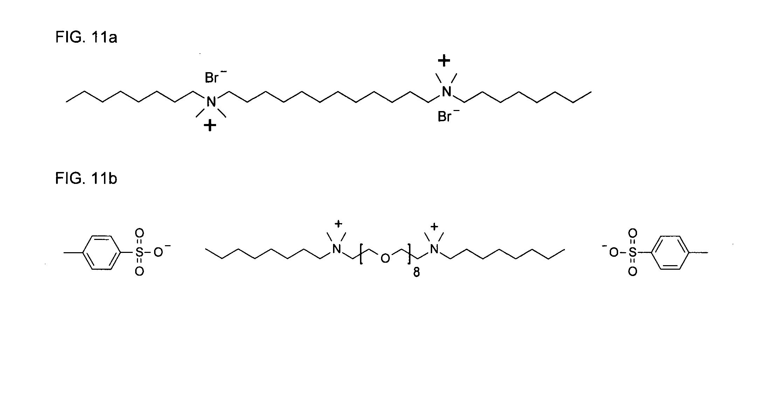

In Fig. 10 ist eine weitere vorteilhafte Ausführungsform für eine quartäre Ammoniumverbindung dargestellt, die hier in Form eines bifunktionellen, verbrückten Quats 1a vorliegt. Zwei Kopfteile 2 mit den Ammoniumgruppen sind durch eine Brücke 4a miteinander verbunden, wobei die Brücke 4a eine reine Kohlenwasserstoffkette, wie beim Beispiel des bifunktionellen Quats mit der Summenformel C₃₂H₇₀Br₂N₂ der Fig. 11a, oder auch eine Kette unter Einschluss anderer Atome, wie beim Beispiel mit der Summenformel C₅₂H₉₆N₂O₁₄S₂ der Fig. 11 b, sein kann.

Neben der dichteren Packung an funktionellen Gruppen, nämlich der geladenen Kopfteile 2, kann auch eine bessere Verbindung mit dem Kunststoff durch die bifunktionellen Quats 1 a erreicht werden. Wenn die beiden Kopfteile 2 bzw. Quatgruppen an die Oberfläche des Kunststoffs 3 wandern, können sie dabei ein Kettenmolekül 8 des Kunststoffs, beispielsweise eine Polyethylenkette, umschliessen. Damit sind sie mechanisch im Kunststoff verankert (verschlauft) und können nicht mehr ausgewaschen werden.

Bifunktionelle Quats 1 a können beispielsweise wie folgt synthetisiert werden:
Zur Herstellung von Substanz 1 (Fig. 11a) mit der Bezeichnung Dodecylmethlen-bis-(dimethyloctylammonium)-bromid C₃₂H₇₀Br₂N₂ (M = 642.73) werden 100 ml Methanol und 17.3 g (110 mmol) Dimethyloctylamin zu 16.4 g (50 mmol) 1,12-Dibromododecan zugegeben und die Lösung für 20 Stunden im Rückfluss gekocht. Danach wird das Methanol abdestilliert und
das verbleibende Öl in 100 ml Wasser aufgelöst. Die Lösung wird mit 100 ml Ethylacetat gewaschen und das Wasser abdestilliert. Der verbleibende Rest wird in 100 ml Methylenchlorid aufgelöst, mit wasserfreiem Natriumsulfat getrocknet, filtriert und anschliessend wird das Methylenchlorid abdestilliert.
Es ergibt sich eine Menge von 29.97 g (91 %) eines blassgelben Öls, das sich nach Stehenlassen für ungefähr fünf Tage schliesslich verfestigt.

Durch Elektrosprühionisierungs-Massenspektrometrie konnte die Struktur verifiziert werden, konnte aber auch das Vorliegen einiger Prozente von Methyläther nachgewiesen werden. Um derartige Probleme zu vermeiden, könnte Aceton anstelle von Methanol als Lösungsmittel verwendet werden.

Die Substanz der Fig. 11 b kann beispielsweise ausgehend von Poly(ethylene glycol) ditosylat C₃₂H₅₀O₁₄S₂ (M= 722.86) (PEG 400) synthetisiert werden. Eine dreihalsige Flasche mit einem 50 ml Tropftrichter, einem Stickstoffeinlass und einem Thermometer wird mit 51 g (0.128 mol) PEG 400 befüllt. Es werden 300 ml trockenes CHCl₃ zugegeben und dann 53.5g (0.28 mol) Tosylchlorid zugefügt. Die Lösung wird auf ungefähr 2 °C mittels eines Eisbades abgekühlt. Durch einen langsamen Zustrom von Stickstoff über die gesamte Zeit wird Feuchtigkeit ferngehalten. Danach werden langsam 45 ml trockenes Pyridin in die Lösung eingetropft, wobei die Temperatur nicht über 4 °C ansteigt. Die Lösung wird weitere 2 Stunden gekühlt gehalten und kann sich dann auf Raumtemperatur erwärmen, auf welcher sie dann ungefähr 20 Stunden gehalten wird. Anschliessend wird die Lösung in eine Mischung aus 200 g Eis und 80 ml konzentrierter Salzsäure gegossen. Nach Schütteln erden die Phasen separiert und die CHCl₃ Phase wird mit wasserfreiem Natriumsulfat getrocknet. Das CHCl₃ wird dann abdestilliert, wobei sich 81.6 g (90%) PEG-ditosylat als Öl ergeben (vergleiche: Organikum, 23. Auflage p. 662).

Eine 250 ml Flasche wird mit 37.92g (52,5 mMol) PEG(400)-ditosylat befüllt. Ungefähr 100 ml Aceton wird zugegeben, dann noch 16.5 g (ungefähr 21.6 ml oder 104.9 mMol) Dimethyloctylamin. Die Mischung wird im Rückfluss für ca. 20 Stunden geführt, wonach das Aceton abdestilliert wird, wobei sich
*α*, *ω*-Bis(dimethyloctylammonium)PEG(400) ditosylate (C₅₂H₉₆N₂O₁₄S₂ M = 1037.46) als ein bräunliches, viskoses Öl ergibt, dessen Elektrosprühionisations-Massenspektrometrie der in Fig. 11 b dargestellten Struktur entspricht (Ergiebigkeit 100%). Das Öl ist in Aceton, Chloroform und Wasser löslich, jedoch unlöslich in Ethylacetat.

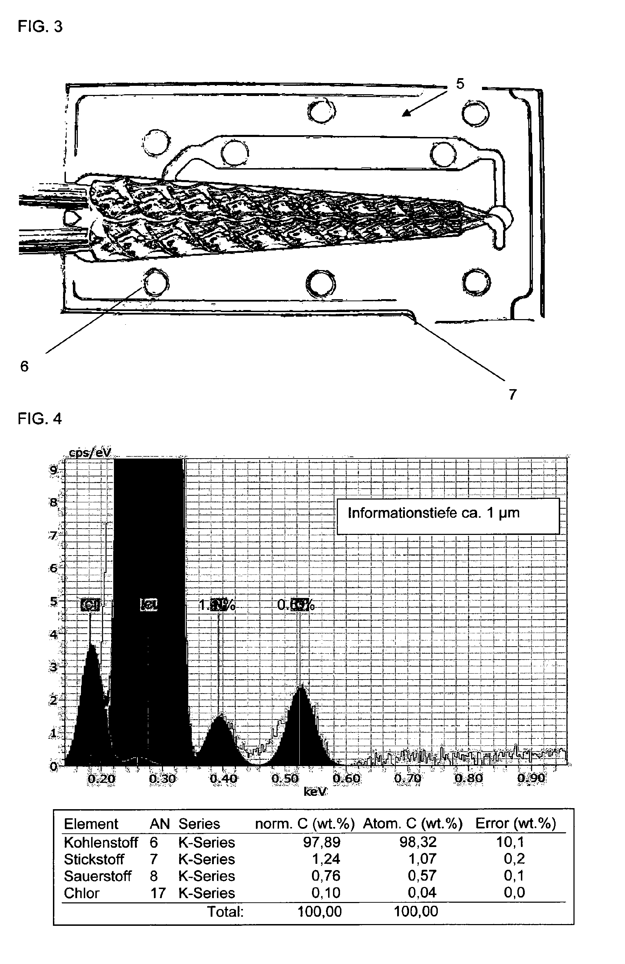

Nach Einmischen der Quats 1 oder 1a in die Kunststoff-Schmelze kann die weitere Verarbeitung, z.B. die Extrusion, erfolgen, beispielsweise mittels eines Extruders 5 wie in Fig. 3 dargestellt. Dieser weist zwei Gleichläuferschnecken 6 in einem Gehäuse 7 auf, wobei die Achsen der Schnecken 6 einen spitzen Winkel miteinander bilden. Die Versuche zur gegenständlichen Erfindung wurden mit einem Gerät durchgeführt, dessen Schneckenlänge 11cm und dessen Volumen 7ml betrug, und dessen Schnecken sich mit 50 Umdrehungen/Minute drehten.

Es wurden Versuche gefahren, bei welchen die in Tabelle 2 angegebenen Additive in eine Polyethylenschmelze in einer Konzentration von 2.5%, 5% und 10% in Polyethylen RT Dowlex 2388 eingearbeitet wurden. Die Compoundierbedingungen umfassten 12 Minuten Mischen bei 210° C. Dabei konnte teilweise Zersetzung der Quats festgestellt werden.

Zum Teil wird starke Violettverfärbung und Geruch nach Amin («fischig») beobachtet, speziell bei Additiven mit vielen Methylgruppen und hohen Konzentrationen. Der wahrscheinliche Zersetzungsmechanismus ist der Hofmann-Abbau. Die Resultate lassen sich wie folgt zusammenfassen:

| | **10%** | **5%** | **2.5%** |
|---|---|---|---|
| **A** | + | + | + |
| **B** | ++ | + | 0 |
| **C** | + | 0 | 0 |
| **D** | 0 | **-** | **-** |
| **E** | **-** | **-** | **-** |

| | | | |
|---|---|---|---|
| mit: ++ starke Verfärbung + Verfärbung 0 schwache Verfärbung - kaum Verfärbung | | | |

Durch die Wahl der Konzentration der Quats mit maximal 5% wird deren Konzentration unterhalb der kritischen Konzentration für die unerwünschte Mizellenbildung (CMC) gehalten. Mizellen sind kleine, kugelförmige Aggregate der Quats im Polyethylen. Sie sind folgendermassen aufgebaut: Die geladenen "Köpfe" der Quats sind im Innern der Mizelle und die apolaren "Schwänze" schauen in das Polyethylen. Mizellen sind unerwünscht, da dabei das Quat nicht an die Oberfläche migriert und sozusagen verloren ist.
Fig. 4 zeigt ein EDX-Spektrum (Energiedispersive Röntgenspektroskopie) von Polyethylen mit 10% Beimischung des Additivs C der obigen Tabelle und

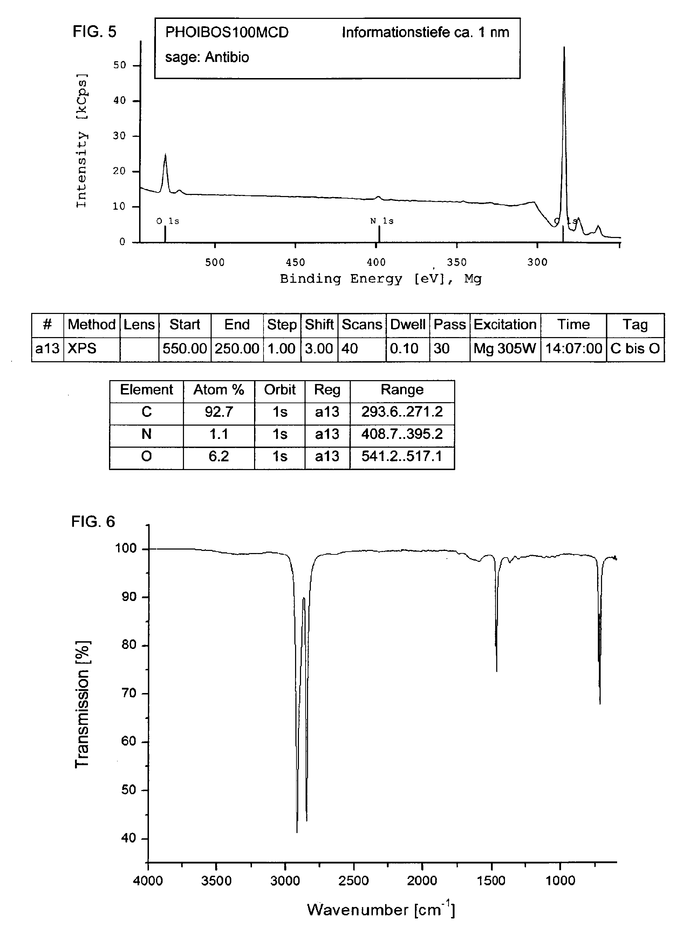

Fig. 5 ein XPS-Spektrum (Röntgen-Photoelektronen-Spektroskopie) dieser gleichen Mischung.

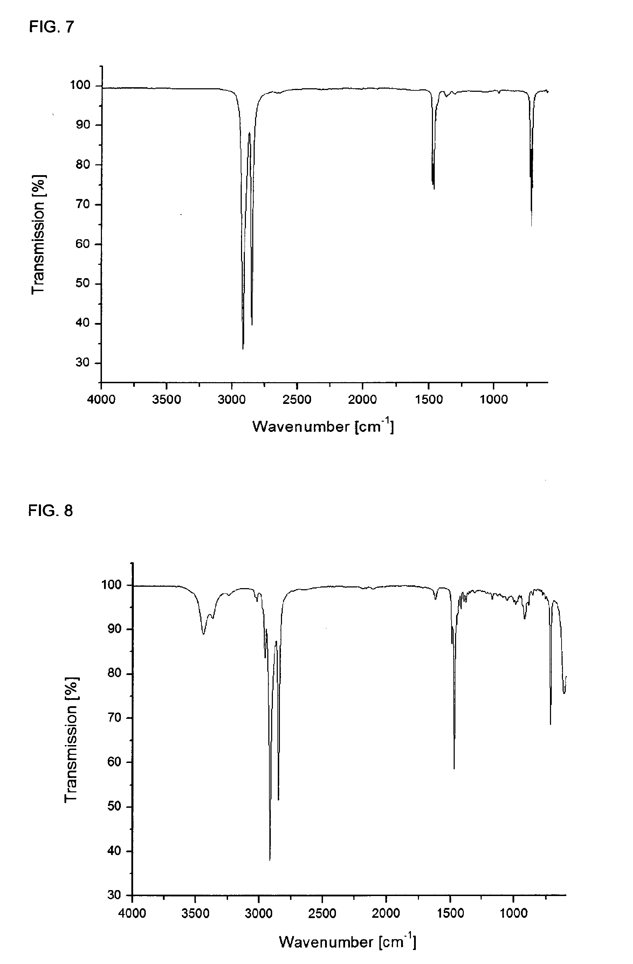

Fig. 6 zeigt das Infrarotspektrum von Polyethylen, Fig. 7 das Infrarotspektrum von Polyethylen mit einer Beimischung von 10% des Additivs C der obigen Tabelle und Fig. 8 zeigt das Infrarotspektrum dieses Additivs selbst.

Alle Proben mit 10% Additiv wurden analysiert. Die Spektren von Polyethylen, Polyethylen mit Additiv und Additiv alleine sind einander ähnlich. Dies ist chemisch verständlich, weil keine funktionellen Gruppen vorhanden sind. Daraus folgt, dass die Infrarotspektroskopie keine Anhaltspunkte über die Mischung ergibt und sich daher nicht für die Analyse eignet. Die Röntgenspektroskopie hingegen ist, wie Fig. 4 und Fig. 5 beispielhaft zeigen, sehr wohl zur Analyse geeignet.

Die Oberflächenspannung gezielt einzustellen ist ein anderer, separater Ansatz eine Verkeimung der Oberfläche des Kunststoffes zu verhindern. Eine geeignete Oberflächenspannung soll das Anhaften der Zellen verhindern. Hier kurz die beiden Ansätze, die aber auch kombiniert werden können: Einerseits kann durch eine geeignete Oberflächenspannung das Anhaften von Biomaterial erschwert oder gänzlich verhindert werden, und andererseits ist aufgrund der bioziden Wirkung der Quats die Biofilmbildung verhindert. Wenngleich starke Bindung zwischen den Quats und den Zellwänden bzw. Membranen der Zellen zunächst zu einer Filmbildung führt, können durch die Quats getötete Zellen nicht mehr an der Oberfläche des Kunststoffs haften und können beispielsweise weggespült werden. Auf einer bioziden Oberfläche kann sich demnach kein Biofilm mehr bilden.

Obgleich die gegenständliche Erfindung vorzugsweise mit quartären Ammoniumverbindungen arbeitet, sind auch andere Verbindungen ebenso einsetzbar, die ein langkettiges Ende und einen positiv geladenen Kopf aufweisen. So besitzt Stickstoff ja eigentlich nur drei Bindungsstellen. Wenn man ihm aber eine vierte Bindung aufzwängt, d.h. ihn zum quartären Stickstoff macht, bewirkt das die positive Ladung. Anstelle des Stickstoffs könnten auch andere, positiv geladene quartäre Atome treten, wie z.B. Phosphonium- und Arsenium-Verbindungen. Denkbar wären auch negativ geladene Gruppen mit langen Kohlenwasserstoffketten, wie z.B. Sulfonsäuren.

Neben dem bislang genannten Polyethylen, das vollständig apolar ist (d.h. keine Ionen oder Dipole, sondern nur elektroneutrale C-C und C-H Bindungen aufweist) können auch andere Kunststoffe mit elektroneutralen Bausteinen zum Einsatz kommen. Bei all diesen Materialien werden die Quats segregiert.

Eine Polyethylenmischung oder ähnliche Mischung reagiert überhaupt nicht mit den Quats und den Ankern. Die Anker sind nur durch Van-der-Waals Kräfte mit dem jeweiligen Kunststoffmaterial verbunden. Weil die Anker aber so lang sind, addieren sich die schwachen Van-der-Waals Kräfte und befestigen sie im Polyethylen.

Die Konzentration der zugemischten quartären Ammoniumverbindungen, wie auch aller anderer gleichartiger Verbindungen in anderen Kunststoffen, ergibt sich aus einer Abwägung von zwei Effekten. Einerseits sind diese Verbindungen teuer und können auch zur Verschlechterung der mechanischen Eigenschaften führen. Andererseits soll für eine optimale biozide Wirkung natürlich die Oberfläche des Kunststoffs, beispielsweise der Innenseite von Rohren zur Leitung von Fluiden, insbesondere Rohren für den Transport von Wasser, möglichst dicht mit den biozid wirkenden Teilen der Quats bedeckt sein. So sind derzeit maximale Konzentrationswerte für die Quats mit 10%, vorteilhafterweise mit maximal 5%, als günstig ermittelt worden.

Die biozid wirkenden Verbindungen könnten auch in harz- oder lackähnliche Substanzen eingebracht sein, die auf die beliebige Oberflächen aufgebracht, beispielsweise aufgesprüht oder in Rohre eingeblasen werden können.

Die Erfindung umfasst also einen Werkstoff aus einer Mischung aus Kunststoff mit Quats zur Bereitstellung einer (hydrophilen Kunststoff-) Oberfläche mit biozider Wirkung und/oder keimabstossender (biofilmbildungs-vermeidender) Wirkung. Als Kunststoff wird dabei hauptsächlich Polyethylen eingesetzt, alternativ dazu auch Polyurethan oder Teflon. Auch eine Verwendung der Quats mit Kunstharzen in lackförmiger Konsistenz ist denkbar.

Anwendung finden diese Mischungen auf Kunststoffoberflächen im Bereich erhöhter Hygiene, wie etwa als innerste Schicht eines Rohres (insbesondere Wasserleitungsrohres), als dem Wasser zugewandte Schichten in einem Ventil, als innerste Schicht von Wasserbehältern, insbesondere Warmwasserspeichern, als innerste Schicht von Zentralheizungsanlagen, Fussbodenheizungen und dgl., als innerste Schicht von Fäkalienleitungen oder auch als innerste Schicht von Schwimmbadauskleidungen oder Teichfolien.

Abschliessend noch einige Erläuterungen zu Begriffen, die im vorhergehenden Text verwendet wurden:
Quats bestehen aus zwei Segmenten: Einem wasserliebenden, polyethylenabweisenden ionischen Teil, dem sog. Kopf. Auf der anderen Seite ist da die Kohlenwasserstoffkette, sie ist wasserabweisend, dafür polyethylenliebend und apolar und heisst Schwanz. Die Unterschiede in Kopf und Schwanz sind für die verschiedenen Effekte verantwortlich, wie z.B. die Mizellenbildung (siehe Fig. 9) und die Oberflächensegregation.

Im Polyethylen strecken die Quats gern die Köpfe zusammen, um nicht mit dem ungeliebten Polyethylen in Kontakt treten zu müssen. An der Oberfläche des Polyethylens strecken sie die Köpfe heraus, ins Vakuum sozusagen, und entgehen so der Berührung mit dem Polyethylen. Bezüglich der Gegenladung, dem Gegenion, d.h. Chlorid oder Bromid, muss ein Unterschied gemacht werden, ob die Oberfläche an Luft oder in Wasser zu liegen kommt. An Luft wird das negativ geladene Gegenion sich in nächster Nähe zum positiv geladenen Stickstoff aufhalten. Ladungstrennung ist energetisch ungünstig, und es kostet viel Energie elektrische Felder aufzubauen. Darum lädt sich die Oberfläche auch nicht auf. Im Wasser jedoch, einem Dielektrikum, ist eine gewisse Beweglichkeit der Gegenionen möglich da der Wasserdipol Ladungen stabilisieren kann. Hohe elektrische Felder treten jedoch nie auf, sie würden durch lonentransport sofort ausgeglichen. Eine gewisse Fluktuation der Gegenionen ist also im Wasser und nicht an der Luft gegeben.

### Bezugszeichenliste

- 1: Quartäre Ammoniumverbindung (Quat)
- 1 a: Bifunktionelles Quat
- 2: Positiver Ladungsträger des Quat
- 3: Kunststoffmaterial
- 4: Kohlenstoffkette des Quat
- 4a: Brücke des bifunktionellen Quat
- 5: Extruder
- 6: Schnecken des Extruders
- 7: Extrudergehäuse
- 8: Kunststoff-Kettenmolekül

## Patentansprüche

1. Kunststoff, insbesondere Polyethylen, mit biozider Oberfläche, **dadurch gekennzeichnet, dass** er zumindest eine quartäre Ammoniumverbindung in einer Konzentration von maximal 10%, vorzugsweise von maximal 5%, aufweist.

2. Kunststoff nach Anspruch 1, **dadurch gekennzeichnet, dass** zumindest eine der quartären Ammoniumverbindungen mindestens einen langkettigen Kohlenwasserstoffrest ,mindestens ein C5-Alkyl, aufweist.

3. Kunststoff nach Anspruch 1 oder 2, **dadurch gekennzeichnet, dass** zumindest einer der quartären Ammoniumverbindungen die gleiche Beschaffenheit wie das Basismaterial des Kunststoffes hat.

4. Kunststoff nach zumindest einem der Ansprüche 1 bis 3, **dadurch gekennzeichnet, dass** der Kohlenwasserstoffrest zumindest einer der quartären Ammoniumverbindungen im Kunststoff verankert ist und dessen Stickstoffgruppe über die Oberfläche des Kunststoffs herausragt.

5. Kunststoff nach Anspruch 1, **dadurch gekennzeichnet, dass** zumindest eine der quartären Ammoniumverbindungen eine bifunktionelle, verbrückte quartäre Ammoniumverbindung ist, die zwei quartäre Ammoniumgruppen aufweist, die durch einen gemeinsamen Substituenten verbrückt sind.

6. Kunststoff nach Anspruch 5, **dadurch gekennzeichnet, dass** die Brücke der bifunktionellen, verbrückten quartären Ammoniumverbindung zumindest ein Polymermolekül des Kunststoffs umschliesst und damit im Kunststoff verankert ist, wobei zumindest eine, vorzugsweise beide quartären Ammoniumverbindungen über die Oberfläche des Kunststoffs herausragen.

7. Kunststoff nach zumindest einem der Ansprüche 1 bis 6, **dadurch gekennzeichnet, dass** dessen Oberfläche mit zumindest einer quartären Ammoniumverbindung beschichtet ist.

8. Kunststoff nach zumindest einem der Ansprüche 1 bis 7, **dadurch gekennzeichnet, dass** dessen Oberflächenenergie einen Wert derart aufweist, dass biologisches Material nicht auf dem Kunststoff haftet.

9. Verfahren zur Herstellung eines Kunststoffes, insbesondere Polyethylen, mit biozider Oberfläche, **dadurch gekennzeichnet, dass** in die Kunststoff-Schmelze zumindest eine quartäre Ammoniumverbindung in einer Konzentration von maximal 10%, vorzugsweise von maximal 5%, eingemischt wird.

10. Verfahren nach Anspruch 9, **dadurch gekennzeichnet, dass** zumindest eine quartäre Ammoniumverbindung mit einem langkettigen Kohlenwasserstoffrest, vorzugsweise zumindest einem C5-Alkyl, in die Kunststoff-Schmelze eingemischt wird.

11. Verfahren nach Anspruch 9 oder 10, **dadurch gekennzeichnet, dass** zumindest eine bifunktionelle, verbrückte quartäre Ammoniumverbindung in die Kunststoff-Schmelze eingemischt wird.

12. Verfahren nach zumindest einem der Ansprüche 9 bis 11, **dadurch gekennzeichnet, dass** zumindest eine quartäre Ammoniumverbindung mit gleicher Beschaffenheit wie das Basismaterial des Kunststoffes in die Kunststoff-Schmelze eingemischt wird.

13. Verfahren nach zumindest einem der Ansprüche 9 bis 12, **dadurch gekennzeichnet, dass** der Kohlenwasserstoffrest zumindest einer quartären Ammoniumverbindung im Kunststoff verankert wird, wobei die Stickstoffgruppe über die Oberfläche des Kunststoffs herausragt.

14. Verfahren zur Herstellung eines Kunststoffes, insbesondere Polyethylen, mit biozider Oberfläche, **dadurch gekennzeichnet, dass** dessen Oberfläche mit zumindest einer quartären Ammoniumverbindung beschichtet wird.

15. Verfahren nach zumindest einem der Ansprüche 9 bis 14, **dadurch gekennzeichnet, dass** die Oberflächenenergie auf einen Wert eingestellt wird, bei welchem biologisches Material nicht auf dem Kunststoff haftet.
